# EUROPÄISCHE PATENTSCHRIFT

(11) **EP 1 631 759 B1**
(45) Veröffentlichungstag und Bekanntmachung des Hinweises auf die Patenterteilung: **02.05.2018**
(21) Anmeldenummer: 04738598.4
(22) Anmeldetag: 04.06.2004
(51) Int. Cl.: F16H 59/10, F16H 63/48

(54) **SCHALTVORRICHTUNG ZUR MECHANISCH KOPPLUNGSFREIEN BERTRAGUNG VON SCHALTBEFEHLEN AN EIN AUTOMATISCHES KRAFTFAHRZEUGGETRIEBE**
SELECTION DEVICE FOR MECHANICAL CLUTCH-FREE TRANSMISSION OF GEAR COMMANDS IN AN AUTOMATIC GEAR BOX OF A MOTOR VEHICLE
DISPOSITIF DE SELECTION DU RAPPORT PERMETTANT LA TRANSMISSION SANS COUPLAGE MECANIQUE DE COMMANDES DE CHANGEMENT DE VITESSES A UNE BOITE DE VITESSES AUTOMATIQUE D'UN VEHICULE AUTOMOBILE

(30) Priorität: 06.06.2003 DE 10326118
(43) Veröffentlichungstag der Anmeldung: 08.03.2006
(73) Patentinhaber: ZF Friedrichshafen AG, 88046 Friedrichshafen (DE)
(72) Erfinder: GIEFER, Andreas, 49448 Lemförde (DE); MEYER, Jörg, 49419 Wagenfeld (DE)
(86) Internationale Anmeldenummer: PCT/DE2004/001144
(87) Internationale Veröffentlichungsnummer: WO 2004/109159

(56) Entgegenhaltungen:
- DE-A- 10 125 526
- DE-A- 19 643 812
- DE-A- 19 831 069
- DE-C- 19 533 141
- US-A- 3 241 640

## Beschreibung

Die Erfindung betrifft eine Schaltvorrichtung zur mechanisch kopplungsfreien Übertragung von Schaltbefehlen an ein automatisches Kraftfahrzeuggetriebe, also sogenannte Shift-by-wire-Schaltung, mit mindestens einem Gehäuse und/oder einem Rahmen, einem Wählhebel zur manuellen Anwahl von Schaltbefehlen für das Kraftfahrzeuggetriebe in mindestens einer Schaltgasse, wobei der Wählhebel von Hand zumindest in 4 Positionen (P, R, N, D), um zumindest eine Schaltachse schwenkbar, führbar ist, mit Übertragungsvorrichtungen zur Übertragung der Schaltbefehle ohne mechanische Kopplung an das Kraftfahrzeuggetriebe, und einer Parksperre in der P-Position des Wählhebels, welche zumindest eine Getriebeausgangswelle arretiert.

Bei Automatgetrieben ist es notwendig, dass beim Einlegen der Position "P" des Wählhebels eine Getriebeausgangswelle blockiert wird, um ein Fortrollen des Fahrzeuges zu verhindern. Bei den neuartigen, sogenannten Shift-by-wire-Schaltungen wird die Wählhebelposition an der Schaltung sensiert und elektrisch an das Getriebesteuergerät übertragen, wobei keine mechanische Verbindung mehr zwischen Schaltung und Getriebe besteht. Das Getriebesteuergerät setzt den Fahrerwunsch um, indem es einen Aktuator (zum Beispiel einen Elektromotor auf der Wählwelle) oder direkt elektro-magnetische Ventile im Getriebe ansteuert.

In der deutschen Offenlegungsschrift DE 196 43 812 A1 wird eine solche Schaltvorrichtung mit Parksperre beschrieben, die über eine vorgespannte Feder eingelegt wird und durch Beaufschlagung mit dem Systemdruck der hydraulischen Getriebesteuerung ausgelegt werden kann.

Der Nachteil solcher Lösungen mit Federspeicher besteht darin, dass zum Auslegen der Parksperre immer Hilfsenergie erforderlich ist. Steht diese nicht zur Verfügung, zum Beispiel durch einen Defekt in der Getriebehydraulik, nichtlaufenden Motor oder ausgebaute Batterie, so ist eine Notentriegelung vorzusehen, um das Fahrzeug zum Beispiel im Notfall oder in der Werkstatt schieben zu können. Die Zurverfügungstellung solch einer Notentriegelung ist entsprechend aufwendig und kostenintensiv.

Ein weiterer Nachteil einer solchen Lösung mit Federspeicher besteht darin, dass das Einlegen der Parksperre nicht unter allen Umständen durch den Wählhebel ausgelöst werden kann. Ist die elektrische Kommunikation zwischen Schaltung und Getriebe unterbrochen, so kann die Parksperre nur durch Unterbrechung der Zufuhr der Hilfsenergie eingelegt werden. Dies bedingt zum Beispiel, dass der Motor ausgeschaltet werden muss, um den hydraulischen Systemdruck zusammenbrechen zu lassen, wodurch der Federspeicher die Parksperre einlegt.

Eine Möglichkeit unter allen Umständen und jederzeit die Parksperre aktiv ein- und auslegen zu können, kann durch den Einsatz eines Seilzuges erreicht werden, der wie bei den konventionellen, mechanisch verbundenen Automatikschaltungen zwischen Schaltung und Getriebe angeordnet wird. Dieser Seilzug wird dann vom Wählhebel bei jeder Schaltbewegung mitbewegt, dient jedoch nur zum Ein- und Auslegen der Parksperre. Die Positionen P, R, N und D werden dabei jedoch elektrisch übertragen. Da dieser Seilzug mittelbar oder unmittelbar am Wählhebel angelenkt ist, wird er auch bei der Bewegung zwischen allen Positionen, in denen keine Parksperre aktiviert oder deaktiviert wird, mitbewegt, legt also einen relativ großen Weg zurück, während zum Ein- und Ausschalten der Parksperre nur ein relativ kleiner Weg notwendig wäre. Die entstehende Reibung bei der unnötigen Bewegung des Seilzuges wirkt sich hierbei nachteilig auf das Schaltgefühl beim Schalten in den Nicht-P-Positionen aus.

Eine andere Möglichkeit, welche das Problem des ständig mitbewegten Seilzugs löst, ist in der DE 101 25 526 A1 beschrieben. Hier wird die Kopplung und Entkopplung von Seilzug für die Parksperre und Wählhebel durch einen mittelbar oder unmittelbar manuell betätigbare Fangvorrichtung erreicht. Ist der Seilzug zur Parksperre einmal mit dem Wählhebel verbunden, so muss durch manuelles Einwirken diese Verbindung wieder gelöst werden, damit der Wählhebel sich frei bewegen kann.

Es ist daher Aufgabe der Erfindung eine Shift-by-wire-Schaltvorrichtung für ein Automatikgetriebe zur Verfügung zu stellen, welche einerseits ein sicheres und jederzeitiges Ein- und Auslegen der Parksperre ermöglicht und andererseits jedoch keine störenden mechanischen Kräfte bei der Bewegung des Wählhebels in allen Positionen außer der P-Position aufweist, wobei im Normalbetrieb eine einfache Schwenkbewegung des Wählhebels zur Deaktivierung der Parksperre und zum Entkoppeln der Parksperre vom Wählhebel ausreichen soll.

Diese Aufgabe wird durch die Merkmale des Patentanspruches 1 gelöst. Besondere Ausbildungen der Erfindung sind in den Unteransprüchen angegeben.

Der Erfinder hat erkannt, dass das gewünschte Ziel dadurch erreicht werden kann, dass eine mechanische Kopplung vom Wählhebel zum Fahrzeuggetriebe derart ausgebildet wird, dass diese ausschließlich und automatisch bei der Einlegung des Wählhebels in die P-Position die Parksperre aktiviert und beim Ausschwenken des Wählhebels über die benachbarte Position hinaus vom Wählhebel automatisch entkoppelt wird. Hierdurch kann die Parksperre unter allen Umständen, dass heißt unabhängig von Vorhandensein von Hilfsenergie oder Funktion beziehungsweise Nichtfunktion der elektrischen Kommunikation ein- und ausgelegt werden. Dies führt zu einer wesentlichen Erhöhung der Sicherheit durch diese Schaltvorrichtung. Die Begrenzung der Bewegung der mechanisch gekoppelten Bauteile auf einen Bereich um die P-Position des Wählhebels eliminiert hierbei die Reibung in der mechanischen Kopplung, beispielsweise im Seilzug, und den dazugehörigen Bauteilen beim Schalten in den weiteren Schaltpositionen, wodurch sich der Schaltkomfort deutlich erhöht.

Ein weiterer Vorteil dieser erfindungsgemäßen Ausführung einer Schaltvorrichtung liegt darin, dass durch die geringe zu überwindende Reibarbeit es nun auch möglich ist, Schaltschemata mit wenigen rastierten Positionen - vorzugsweise P und X - zu verwenden, wobei die restlichen Schaltpositionen nur durch Tip-Bewegungen angesteuert werden. Hierzu ist es nämlich, dass die Rückstellkräfte nicht durch sonst übliche Reibungskräfte einer Seilzugverbindung gestört werden.

Kinematisch lässt sich dieses Grundprinzip beispielsweise durch ein Mehrfachgelenk in der Verbindung zwischen Wählhebel und mechanischer Kopplung zum Getriebe lösen. Es wird daraufhingewiesen, dass unter mechanischer Kopplung hierbei zum Beispiel ein Seilzug oder eine Gestängeverbindung zwischen dem Getriebe und der Schaltvorrichtung zu verstehen ist.

Diese Mehrfachgelenkverbindung weist vorteilhaft ausschließlich Gelenkachsen auf, die parallel zur Schaltachse des Wählhebels angeordnet sind, wobei weiterhin vorteilhaft die Mehrfachgelenkverbindung eine, vorzugsweise zwischen den restlichen Gelenkachsen angeordnete Gelenkachse aufweist, welche entlang einer Kulissenkontur, vorzugsweise in einer Kulissenkontur des Wählhebels verläuft.

Durch die Verwendung einer solchen Kulissenkontur in oder am Wählhebel ist es möglich, diese derart auszugestalten, dass in einem bestimmten Bewegungsbereich des Wählhebels durch die Bewegung des Wählhebels keine Positionsänderung im Mehrfachgelenk stattfindet, während beim Einlegen der P-Position zumindest eine Achse des Mehrfachgelenkes, vorzugsweise eine mittenständige Achse des Mehrfachgelenkes, ausgelenkt wird, wodurch mittelbar der Seilzug bewegt und damit die Parksperre eingelegt wird.

Bezüglich der Ausführung der Kulisse im Wählhebel ist darauf hinzuweisen, dass es im Rahmen der Erfindung liegt, wenn die Kulisse einerseits als entsprechend geformter Schlitz im Wählhebel ausgeführt wird, jedoch kann andererseits auch die gleiche Wirkung durch eine offene Kontur der Kulisse erreicht werden.

Für eine sehr einfache Ausbildung der erfindungsgemäßen Schaltvorrichtung kann vorgesehen werden, dass eine Mehrfachgelenk-Verbindung mit nur einer rahmen- oder gehäuseseitig gelagerten festen Gelenkachse und einer, vorzugsweise direkt, mit dem Seilzug oder Gestänge verbundenen freien Gelenkachse, die in oder an der Kulisse geführt wird, verwendet werden.

In einer besonderen Ausführung der Schaltvorrichtung weist das Mehrfachgelenk ein rahmen- oder gehäuseseitig gelagertes Schubdrehgelenk auf, wobei dieses vorzugsweise an der Verbindung zum Seilzug oder Gestänge angeordnet ist und wobei vorzugsweise die Schubbewegung die Aktivierung oder Deaktivierung der Parksperre bewirken soll.

In einer anderen besonderen Ausführung wird vorgeschlagen, die Mehrfachgelenk-Verbindung der Schaltvorrichtung mit einem rahmen- oder gehäuseseitig gelagerten Hebelgelenk an der Verbindung zum Seilzug oder Gestänge auszuführen, wobei hier die Bewegung eines Hebels eine Schubbewegung am Seilzug und damit die Aktivierung oder Deaktivierung der Parksperre bewirken soll.

Des weiteren weist eine besondere Ausführung der Mehrfachgelenk-Verbindung der Schaltvorrichtung ein Drehgelenk, vorzugsweise ein endständiges Drehgelenk, auf, welches rahmen- oder gehäuseseitig gelagert ist.

Entsprechend der Ausführung der Shift-by-wire-Schaltvorrichtung ist eine elektronische oder optische Erfassungsvorrichtung für die Positionierung des Wählhebels vorgesehen, wobei diese vorzugsweise im Bereich der Schaltachse des Wählhebels angeordnet ist. Es liegt jedoch auch im Bereich der Erfindung, wenn die Erfassungsvorrichtung auf irgendeine sonstige im Stand der Technik bekannte Art und Weise verwirklicht wird, um die Positionierung des Wählhebels zu sensieren.

Zusätzlich kann die Schaltvorrichtung auch eine federbelastete Kurvatur aufweisen, die unmittelbar oder mittelbar mit der Bewegung des Wählhebels zusammenwirkt, so dass eine Simulation von Schaltkräften erreicht wird. Hierbei kann es auch vorteilhaft sein, wenn mindestens 2 Positionen, z.B. P und X, stabil rastiert und mindestens 2 Positionen, z.B. R, N, D und gegebenenfalls + und - nur instabil antippbar ausgeführt sind.

Wird die Schaltvorrichtung nicht nur als einfache Automatikschaltvörrichtung ausgeführt, sondern soll weitere Funktionen, wie beispielsweise die einer Triptronic, aufnehmen, so schlägt der Erfinder vor, dass der Wählhebel mittelbar oder unmittelbar zusätzlich um eine senkrecht zur Schaltachse angeordnete Wählachse gelagert ist, wobei auch der Rahmen um diese Wählachse beweglich gelagert sein kann. Bei einer solchen Ausführung ist es selbstverständlich, dass ein zusätzlicher äußerer Rahmen oder ein äußeres Gehäuse vorgesehen wird, in welchem dann die gesamte Schaltvorrichtung gelagert ist.

Vorteilhaft ist hierbei, wenn die Verbindung zwischen Seilzug oder Gestänge und Mehrfachgelenk ein Drehgelenk aufweist, dessen Achse parallel, vorzugsweise koaxial, zur Wählachse verläuft. Diese Drehgelenkverbindung ermöglicht dann eine freie Bewegung des Wählhebels um die Wählachse, ohne zu einer Störung durch das Gestänge oder den Seilzug zu fuhren.

In einer anderen Art dieser Ausführung der Schaltvorrichtung mit mehreren, vorzugsweise parallelen, Schaltgassen kann der Wählhebel auch auf der Höhe der Wählachse geteilt ausgebildet werden, so dass nur der obere Teil des Wählhebels um die Wählachse schwenkbar ausgebildet ist und der untere Teil des Wählhebels nur um die Schaltachse schwenkbar gelagert ist.

Vorteilhaft ist weiterhin den, um die Wählachse schwenkbaren Teil des Wählhebels mit federnden Rückstellvorrichtungen, vorzugsweise einer Rückstellfeder, auszustatten, so dass eine selbständige Rückstellung in eine vorbestimmte Lage erfolgt.

Es liegt weiterhin im Rahmen der Erfindung, wenn für die Bewegung des Wählhebels um die Wählachse eine federbelastete Kurvatur zur Simulation von Schaltkräften vorgesehen ist.

Weitere Merkmale und Vorteile der Erfindung ergeben sich aus den Unteransprüchen und der nachfolgenden Beschreibung bevorzugter Ausführungsbeispiele unter Bezugnahme auf die Zeichnungen. Es zeigen:
- Figuren 1 - 13:: Erstes Ausführungsbeispiel der erfindungsgemäßen Schaltvorrichtung mit unterschiedlichen Ansichten und Wählhebelpositionen mit Schub-Drehgelenk;
- Figuren 14 - 17:: Zweites Ausfuhrungsbeispiel der erfindungsgemäßen Schaltvorrichtung mit einem Hebelgelenk anstelle des Schub-Drehgelenkes in verschiedenen Ansichten in der Schaltposition "P";
- Figuren 18 - 24:: Drittes Ausführungsbeispiel der erfindungsgemäßen Schaltvorrichtung mit unterschiedlichen Ansichten und Wählhebelpositionen mit Zweifachgelenk;
- Figuren 25 - 26:: Erfindungsgemäße Schaltvorrichtung mit um zwei Achsen schwenkbar gelagertem Wählhebel in zwei Wählpositionen;
- Figuren 27 - 28:: Zwei Varianten von Schaltschemata mit zwei stabil rastierten und mehreren instabilen Wählhebelpositionen.

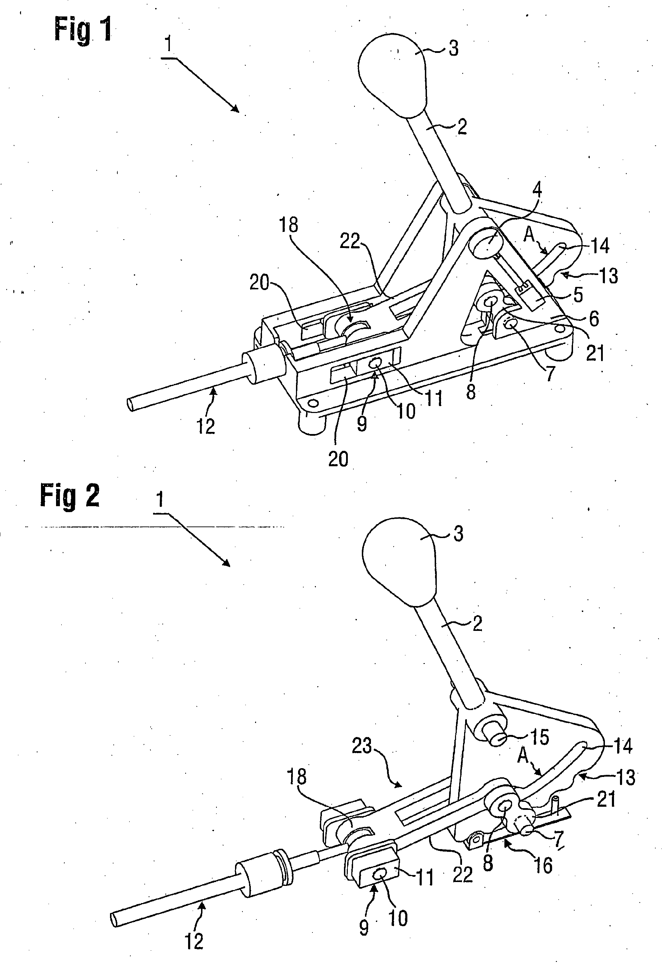

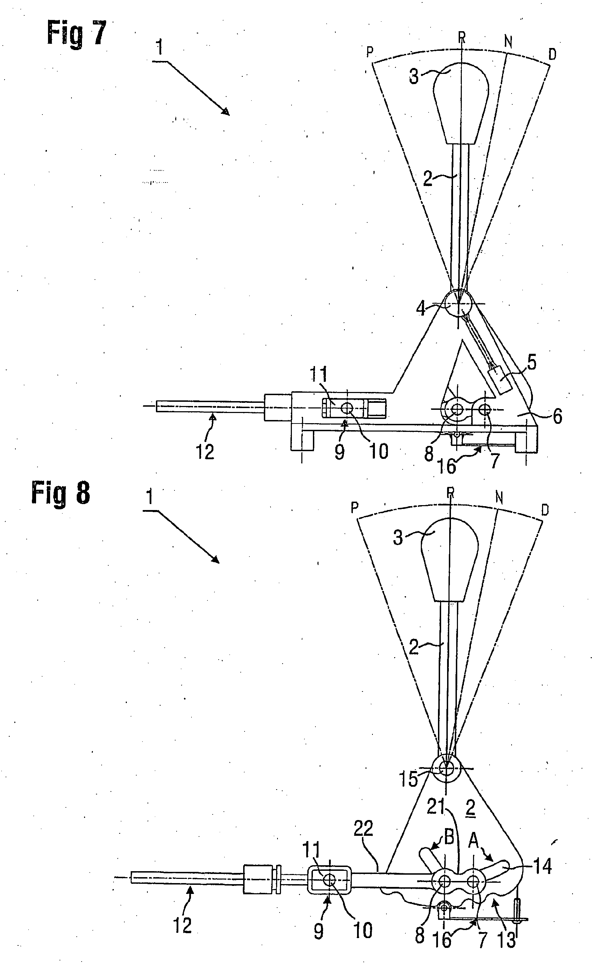

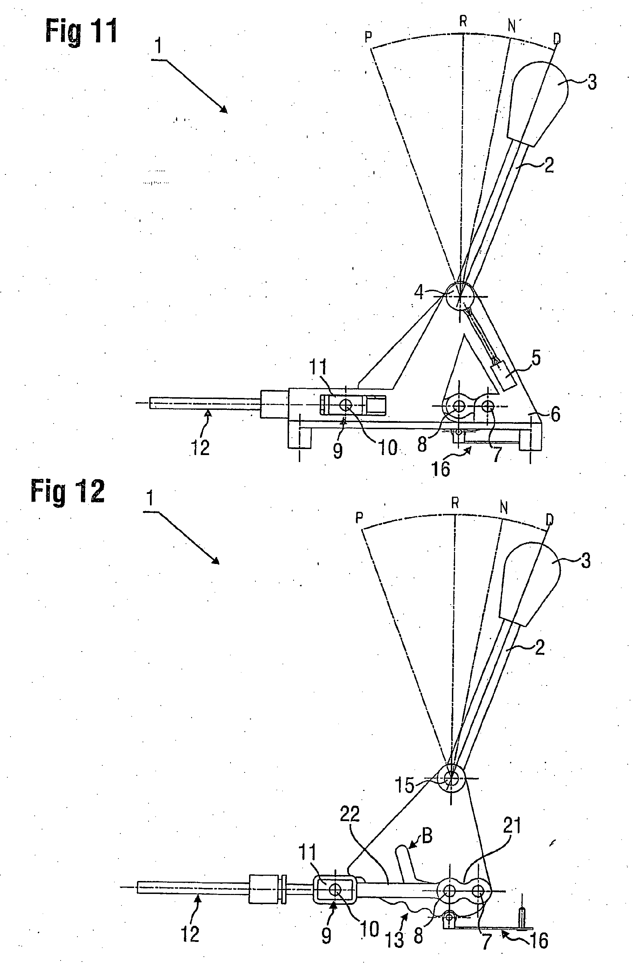

Die Figuren 1 bis 13 zeigen eine bevorzugte Ausführungsform der erfindungsgemäßen Schaltvomehtung in versehiedenen Ansiehten und Detailansichten für unterschiedliche Schaltpositionen des Wählhebels.

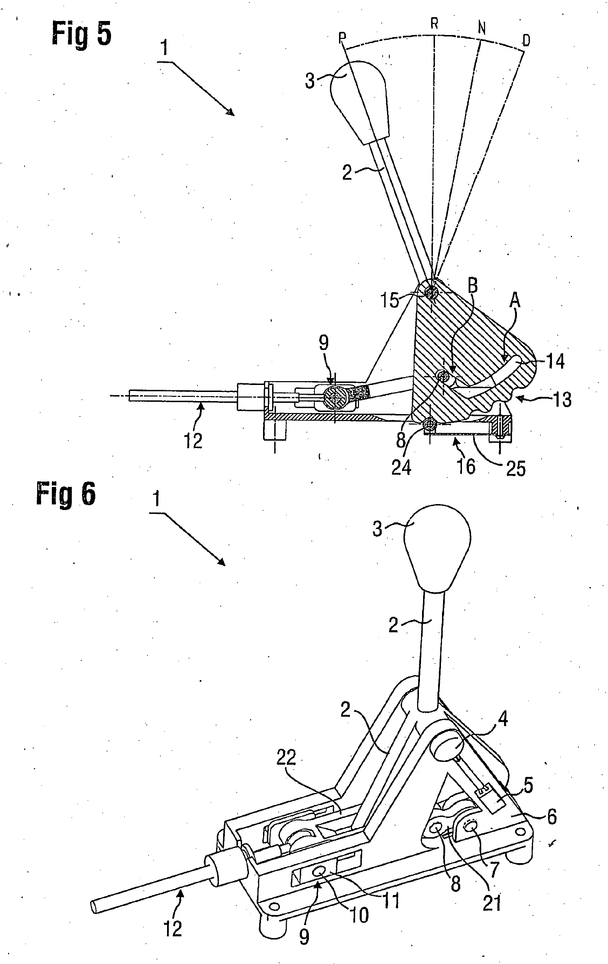

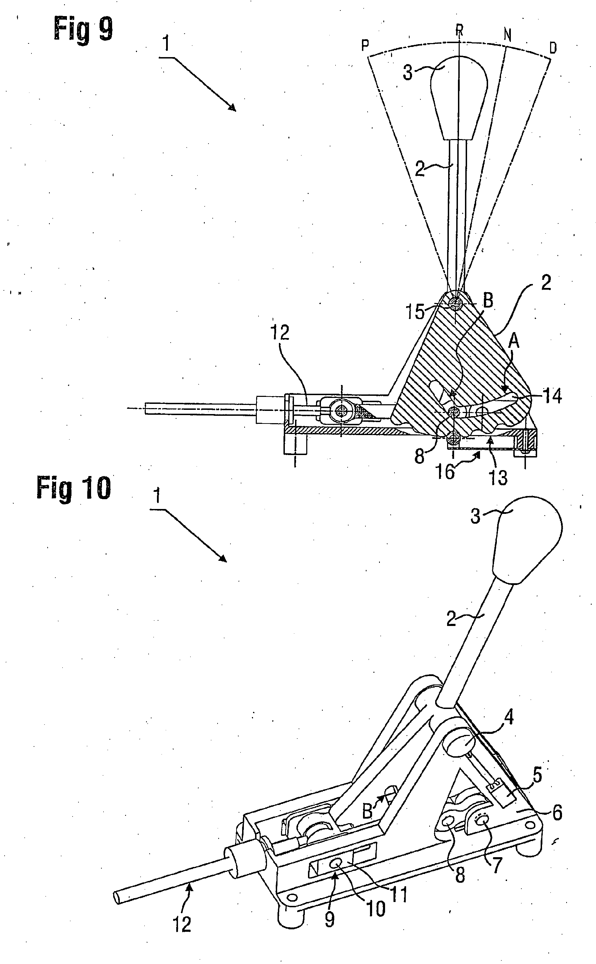

In den Figuren 1 bis 5 ist die Schaltvorrichtung 1 mit der Wählhebelstellung "P" gezeigt. Die Figuren 6 bis 9 zeigen die Wählhebelposition "R" und die Figuren 10 bis 13 die Wählhebelposition "D".

Die vollständige erfindungsgemäße Schaltvorrichtung dieser Ausführungsform ist am besten in der 3-D-Schrägansicht erkennbar. Diese zeigt die Schaltvorrichtung 1 mit einem Wählhebel 2, der um eine Schaltachse 15 schwenkbar gelagert ist und am oberen Teil des Wählhebels über einen Knauf 3 verfügt, während die untere Seite des Wählhebels in der Bewegungsebene flach und in etwa als Kreisausschnitt ausgeführt wird. Der unten liegende Kreisausschnitt des Wählhebels 2 verfügt über einen Kulissenschlitz 14 und eine an der Randseite befindliche Kurvatur 13 für die Simulation von Schaltkräften. Entsprechend der Eigenschaft der Shift-by-wire-Schaltvorrichtung befindet sich im Bereich der Schaltachse 15 eine Sensorik 4, die die entsprechenden Schaltpositionen des Wählhebels 2 abgreifen kann und über eine Steckverbindung 5, die als elektrische Schnittstelle dient, diese Schaltbefehle zum Fahrzeug beziehungsweise dem Fahrzeuggetriebe weiterleitet.

Erfindungsgemäß besteht jedoch trotz der Shift-by-wire-Ausführung der Schaltvorrichtung eine mechanische Kopplung zum Schaltgetriebe, die hier in der Ausführung eines Seilzuges 12 verwirklicht ist.

Der Seilzug 12 wird über eine Schubdrehgelenk 9 durch eine dort stattfindende Schubbewegung aktiviert, wobei das Schubdrehgelenk 9 auf zwei Seiten des Rahmens 6 mit Schiebern 11 in Langlöchern 20 verschiebbar ausgebildet sind und die Schieber 11 wiederum die Drehachse 10 des Schubdrehgelenks 9 lagern.

Ebenfalls gelagert im Rahmen durch eine Gelenkachse 7 ist ein erstes Gelenkstück 21 gezeigt, welches am zweiten freien Ende eine freien Gelenkachse 8 aufweist, in der wiederum ein zweites Gelenkstück 21 drehbar um die Gelenkachse 8 gelagert ist. Das andere Ende des Gelenkstückes 21 ist wiederum mit der verschiebbaren Drehachse 10 in den Schiebern 11 gelagert. Insgesamt bildet diese beschriebene Konstruktion der Gelenkstücke und Gelenkachsen das erfindungsgemäße Mehrfachgelenk, wobei die freie Gelenkachse 8 durch die Langlochkulisse 14 des Wählhebels 2 verläuft. Entsprechend den Bewegungen des Wählhebels 2 und dem räumlichen Verlauf der Langlochkulisse wird ein Anheben und Absenken beziehungsweise eine Ruhephase der freien Gelenkachse 8 bewirkt, so dass entsprechend der gezeigten mechanischen Kopplung zum Seilzug 12 eine Schub- oder Druckwirkung auf den Seilzug 12 ausgeübt werden kann.

Die Figur 2 zeigt in gleicher Ansicht nochmals den Wählhebel 2 einschließlich Mehrfachgelenk 23 und den damit verbundenen Seilzug, jedoch ohne Rahmen. Besonders gut ist hierbei das Federsystem 16, bestehend aus einer Blattfeder mit Rolle, welche in der Kurvatur 13 verläuft zu erkennen. Durch dieses Federsystem werden die ansonsten nicht vorhandenen Schaltkräfte in an sich bekannter Weise für den Fahrer simuliert.

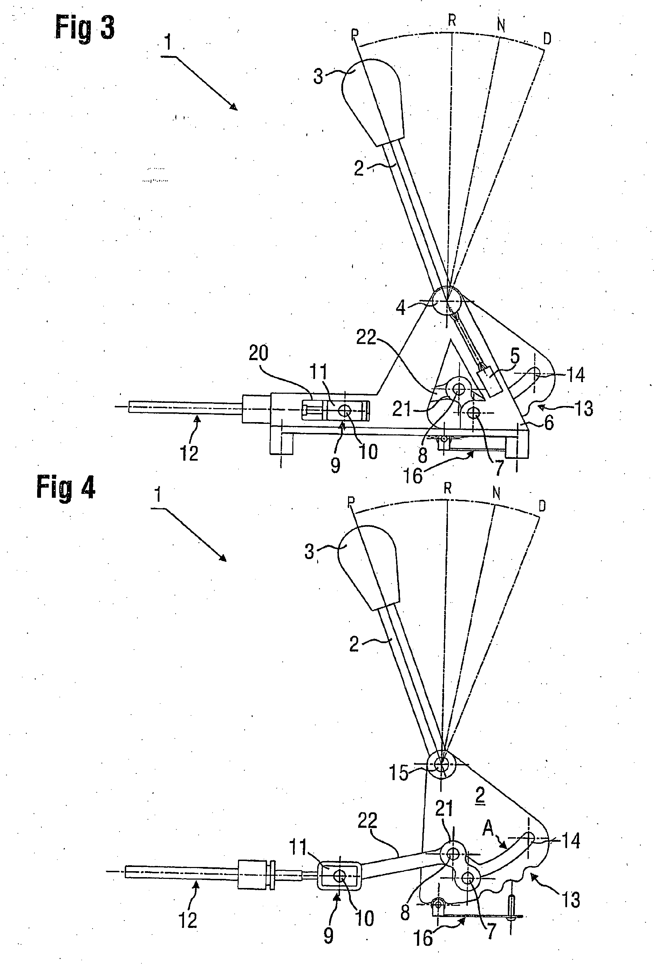

In den Figuren 3 und 4 ist nochmals eine Seitenansicht der Darstellungen aus den Figuren 1 und 2 gezeigt, wobei zusätzlich die möglichen Schaltpositionen P, R, N, D dieser besonderen Ausführung skizziert sind.

Die Figur 5 zeigt einen Längsschnitt durch die Figuren 1 in der Ebene des Hebelarms, so dass hier besonders gut die Form der Langlochkulisse 14 erkennbar ist. Diese Langlochkulisse 14 verfügt über einen ersten Kulissenbereich, der einen Kreisabschnitt darstellt, der konzentrisch um die Schaltachse 15 des Wählhebels verläuft, so dass ein Verschwenken des Wählhebels um diesen Winkelbreich für die freie Achse 8 zu keiner Bewegung fügt. Weiterhin ist der lineare Kulissenbereich B erkennbar, der einen um die Schaltachse 15 gedachten Kreis, dessen Kreislinie deckungsgleich mit dem Kulissenbereich A ist, schneidet. Befindet sich die freie Achse 8 in diesem Kulissenbereich B - der jedoch erfindungsgemäß nicht unbedingt linear ausgeführt sein muss -, so führt ein Verschwenken des Wählhebels 2 zu einem Anheben der freien Achse 8 und damit einer Verschiebung des Drehschubgelenkes 9 des Mehrfachgelenkes 23. Entsprechend der Ausführung des Schnittwinkels zwischen dem linearen Kulissenbereich B und dem kreisförmig angelegten Kulissenbereich A wird die Schwenkbewegung des Wählhebels 2 zwischen den Positionen R und P zu einer unterschiedlich starken Schubwirkung im Schubdrehgelenk 9 und damit im Seilzug 12 führen.

Die Figuren 6 bis 9 zeigen in gleicher Reihenfolge die gleichen Ansichten der bevorzugten Ausführung der Schaltvorrichtung der Figuren 1, 3, 4 und 5, wobei jedoch der Wählhebel 2 sich in der R-Position befindet und entsprechend die freie Gelenkachse 8 sich am Schnittpunkt zwischen den beiden Kulissenbereichen A und B aufhält. In dieser Position ist eine lineare Streckung des Mehrfachgelenkes 23 erreicht, so dass die Gelenkachsen 7, 8 und 9 in einer Linie verlaufen und damit eine maximale Streckung des Mehrfachgelenkes 23 erzeugt ist, welches zu einer maximalen Einschubstellung des Seilzuges 12 führt. Dies entspricht der Freigabe der Parksperre, so dass ab dieser Stellung eine freie Bewegung der Ausgangswelle des angekoppelten Schaltgetriebes ermöglicht wird.

Die Figuren 10 bis 13 entsprechen in ihrer Darstellung und Ansicht wiederum den Figuren 6 bis 9 der bevorzugten Ausführung der erfindungsgemäßen Schaltvorrichtung, allerdings befindet sich der Wählhebel hier in der Schaltposition P. Da sich über diesen Bereich der Auslenkung zwischen R und D die freie Gelenkachse 8 des Mehrfachgelenkes im kreisförmig gekrümmten Kulissenbereich B der Langlochkulisse befindet, erfährt diese Achse 8 über diesen Schwenkbereich keinerlei Bewegung, so dass auch keine Kräfte mit Ausnahme der sehr gering gestaltbaren Reibungskräfte durch die mechanische Kopplung zwischen Schaltvorrichtung und Schaltgetriebe für die Parksperre wirksam werden können.

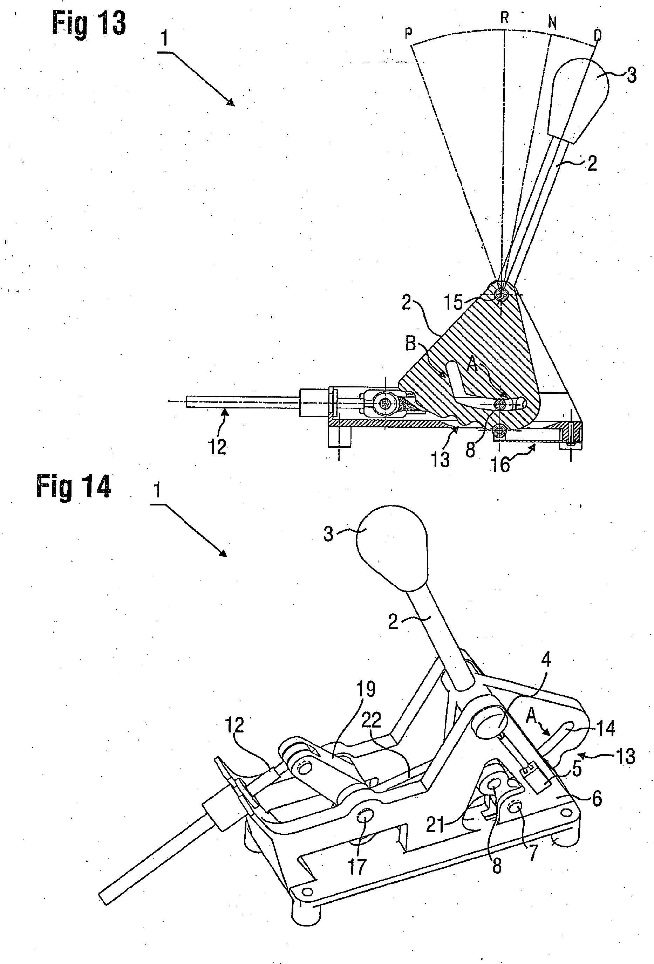

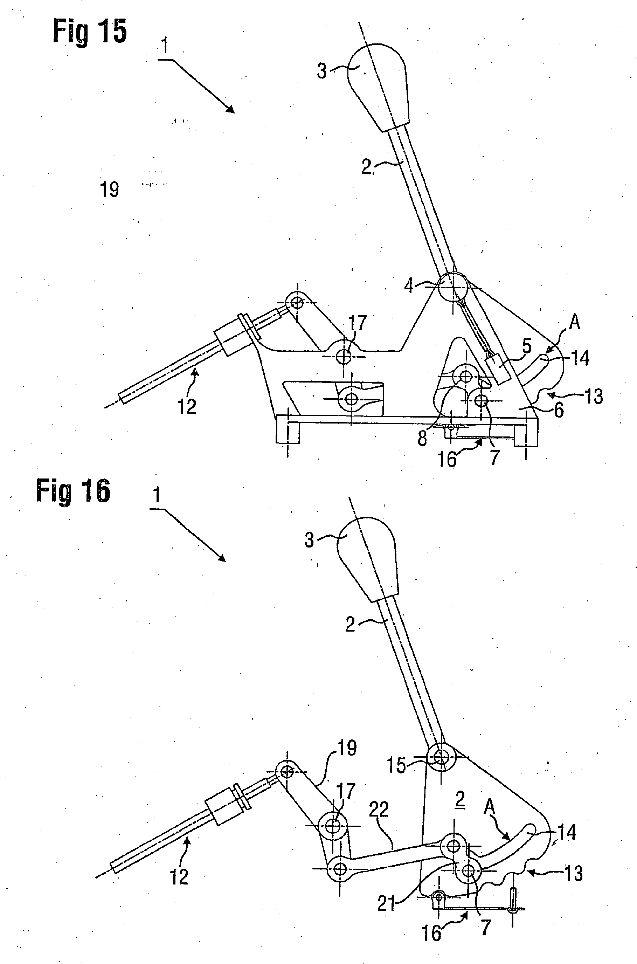

Die Figuren 14 bis 17 zeigen eine ebenfalls im Rahmen der Erfindung liegende weitere Ausführungsform der Schaltvorrichtung 1 mit Mehrfachgelenk zur Betätigung der Parksperre. Allerdings wird hier anstelle der Verbindung zum Seilzug durch ein Schubdrehgelenk ein Hebelgelenk verwendet.

Die Figuren entsprechen in ihrer Darstellung den Figuren 1, 3, 5 und 6 der bevorzugten Ausführungsform.

Anstelle des Schubdrehgelenkes wird ein Hebelgelenk eingesetzt, welches über einen zweiarmigen Hebelarm 19 verfügt, der über eine Gelenkachse 17 drehbar im Rahmen 6 gelagert ist. An der unteren Seite des -Hebelgelenks greift das zweite Gelenkstück 22 über eine Drehachse 10 an, so dass ein Abknicken des Mehrfachgelenkes 23 analog zur Verschiebung des Schubdrehgelenkes ein Verschwenken des Hebelgelenkes 19 bewirkt und der am anderen Ende des Hebelgelenkes 19 angreifende Seilzug 12 entsprechend bewegt wird. In dieser Ausführung ist die Befestigung zwischen dem Seilzug 12 und dem Hebelgelenk 19 durch eine Drehachse 18 verwirklicht, so dass die Verschränkungen zwischen Hebelgelenk 19 und Seilzug bei einer Schubbewegung des Seilzuges kompensiert werden können.

Bezüglich der mechanischen Wirkung des Mehrfachgelenkes kann auf die Beschreibung der Figuren 1 bis 13 verwiesen werden, da diese grundsätzlich identisch verlaufen. Es ist aus diesem Grunde auch lediglich die eine P-Position des Wählhebels dargestellt.

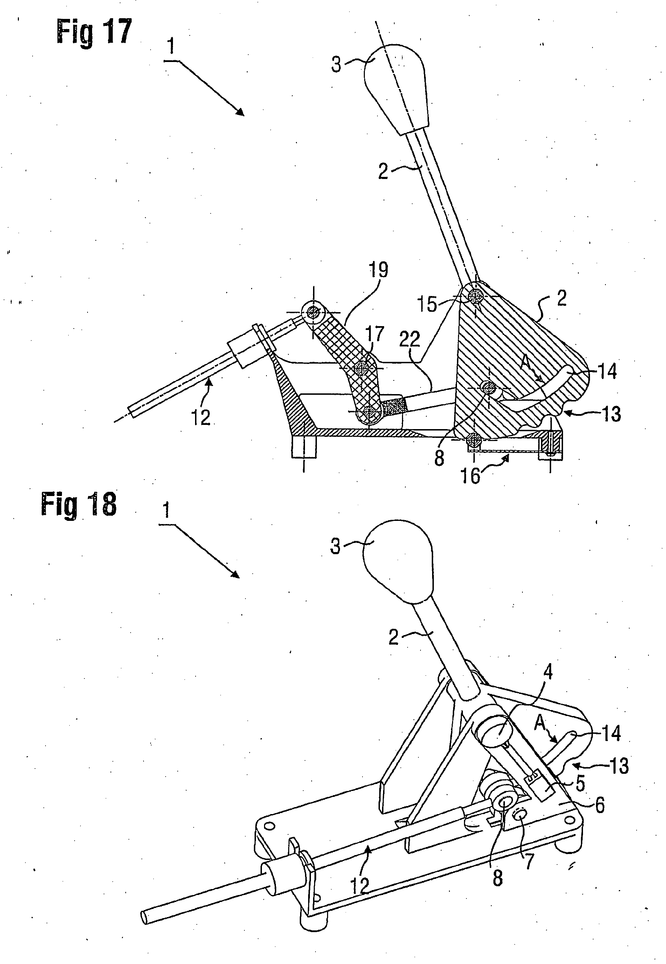

Die Figuren 18 bis 24 zeigen eine weitere vereinfachte Ausführung der erfindungsgemäßen Schaltvorrichtung mit einem Zweifachgelenk als Kopplung zwischen Wählhebel 2 und Seilzug 12.

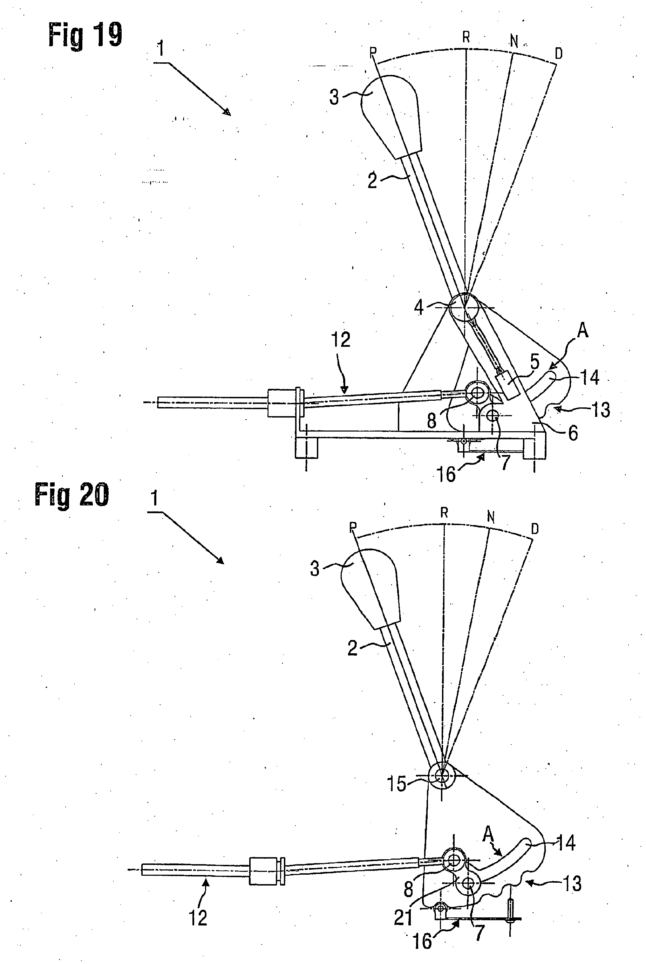

Die Figuren 18 und 19 zeigen die Schaltvorrichtung 1 mit jeweils einem Wählhebel 2 in P-Position in 3-D-Ansicht und Seitenansicht. In beiden Figuren ist zu erkennen, dass die erste feste Schwenkachse 7 im Rahmen 6 gelagert ist, während die zweite freie Schwenkachse 8 einerseits als Verbindung zum Seilzug 12 dient und andererseits in der Kulisse 14 mit den beiden unterschiedlichen Kulissenabschnitten A und B geführt wird. Die feste Schwenkachse 7 und die freie Schwenkachse 8 sind durch das einzige Gelenkstück 21 miteinander verbunden.

Die Figuren 20 zeigt zur Verdeutlichung der Rastierung im unteren Bereich der Schaltvorrichtung eine Seitenansicht des Wählhebels 2, einschließlich Seilzug 12 und dem in den zuvor beschriebenen Figuren gezeigten Federsystem 16 zur Rastierung des Wählhebels mit der entsprechenden Kurvatur 13.

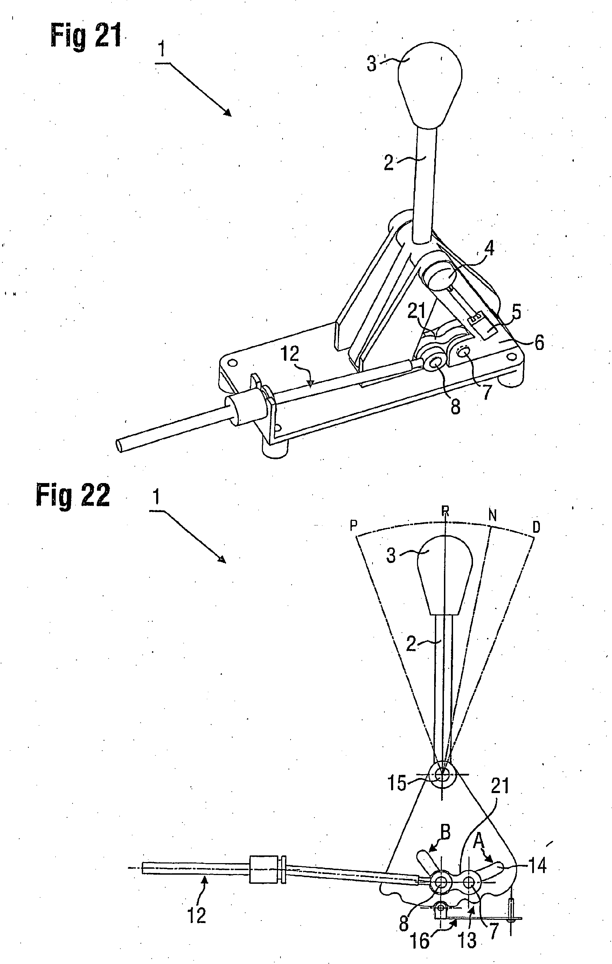

Die Figuren 21 und 22 zeigen diese einfache Ausführung der Schaltvorrichtung mit einem Wählhebel in der R-Position in 3-D- und Seitenansicht. Insbesondere in der Seitenansicht ist gut zu erkennen, dass sich in dieser Position des Wählhebels die freie Gelenkachse 8 gerade im Schnittpunkt zwischen dem gekrümmten Kulissenabschnitt A und dem linearen ansteigenden Kulissenabschnitt B befindet. Wird der Wählhebel von dieser Position aus weiter in Richtung der D-Position geschwenkt, so ergibt sich eine bezüglich der Kupplung zum Seilzug 12 und damit zur Parksperre freie Bewegung.

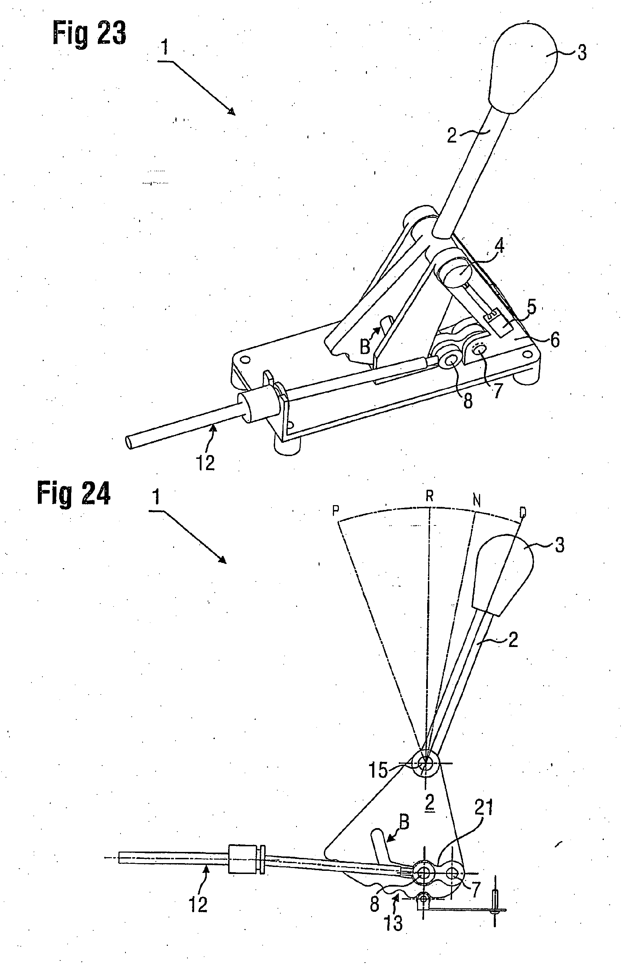

Die Figuren 23 und 24 zeigen, entsprechend den Figuren 21 und 22, nochmals die Schaltvorrichtung, allerdings befindet sich der Wählhebel 2 in der D-Position. Es ist zu erkennen, dass die freie Schwenkachse 8 ohne jegliche Ortsveränderung relativ zur R-Position des Wählhebels 2 geblieben ist und damit zwischen den Positionen R und D keine Bewegung des Seilzuges 12 bewirkt hat.

Die zuvor gezeigten beiden Ausführungsformen verdeutlichen die Ausführung der mechanischen Kopplung der Parksperre am Beispiel einer Schaltvorrichtung mit einer einzigen Schaltgasse. Es wird jedoch daraufhingewiesen, dass es auch im Rahmen der Erfindung liegt, diese Art der Kopplung der Parksperre mit dem Wählhebel auf eine Schaltvorrichtung zu übertragen, welche über mehrere Schaltgassen verfügt, indem die gezeigt Vorrichtung oder zumindest ein Wählhebelarm über eine Wählachse, die vorzugsweise senkrecht zur Schaltachse steht, seitlich verschwenkbar ausgeführt ist. In diesem Fall kann es vorteilhaft sein, die Befestigung zum Seilzug entsprechend der Längsrichtung des Seilzuges drehbar auszugestalten, wobei vorzugsweise der Seilzug parallel und noch besser koaxial zur Wählachse angeordnet werden sollte.

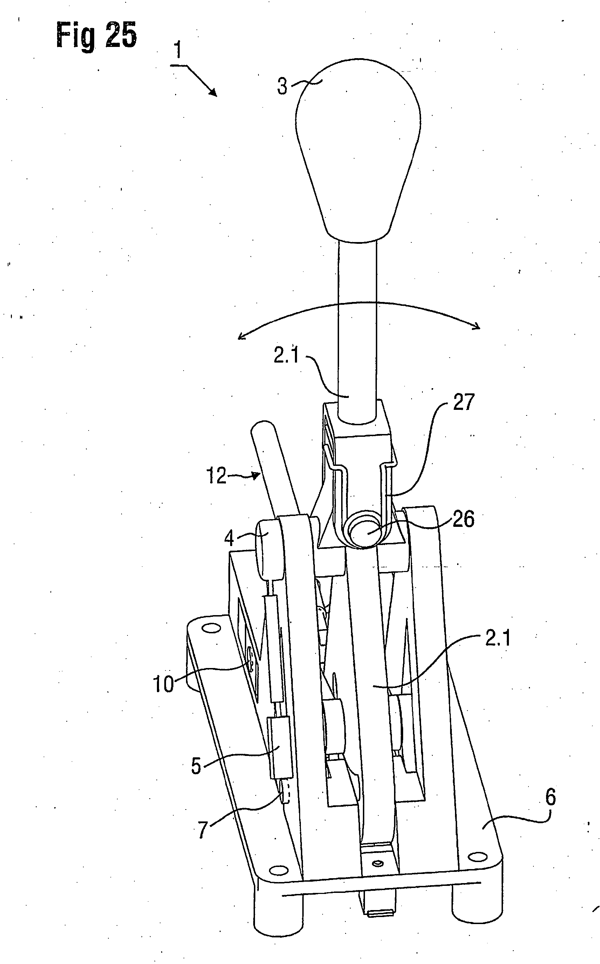

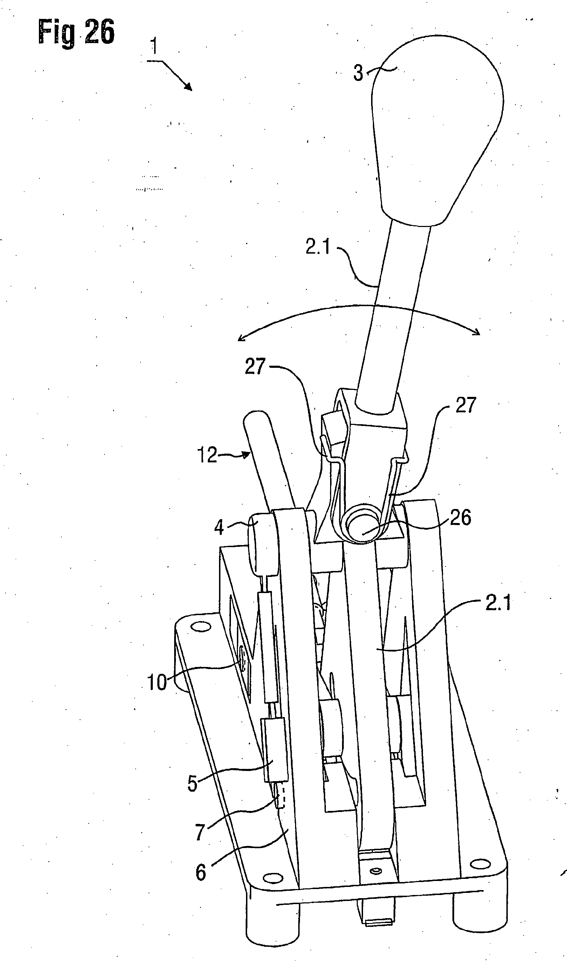

Die Figuren 25 und 26 verdeutlichen eine solche bevorzugte Ausführung einer Schaltvorrichtung mit vorhandener Wählachse. Diese Figuren zeigen die Schaltvorrichtung in einer 3-D-Darstellung, wobei die Figur 25 den Wählhebel 2 in nichtausgelenkter Position zeigt, während in der Figur 26 der erste Hebelarm 2.1 gegenüber dem zweiten Hebelarm 2.2 seitlich ausgelenkt ist. Im Bereich der, diese Auslenkung ermöglichenden Wählachse 26 befindet sich ein Federelement 27, welches die Rückstellung des ersten Wählhebelarms bewirkt.

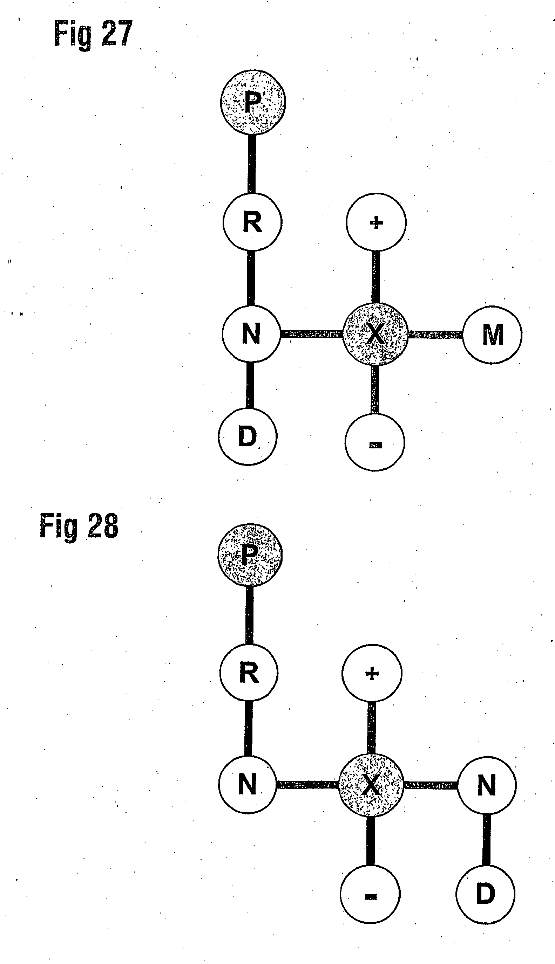

Die Figuren 27 und 28 zeigen zwei mögliche Schaltschemata, die über jeweils zwei (grau unterlegt) stabil rastierte Schaltpositionen P und X verfügen, wobei die restlichen Schaltpositionen R, N, D, M, - und + instabil sind und somit nur durch Antippen des Wählhebels erreicht werden, wobei der Wählhebel von selbst wieder in die zuvor gewählte stabile Position zurückfällt. Eine derartige Ausführung lässt sich mit angenehmen Schaltkräften und angenehmen Schaltgefühl bevorzugt dadurch erreichen, dass - wie in der Erfindung dargestellt -bei der Bewegung in die verschiedenen Schaltpositionen möglichst geringe Reibungskräfte auftreten.

Es versteht sich auch, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung eine mechanische Umkehr der Funktionen der einzelnen mechanischen Elemente der Erfindung zu bewirken.

### Bezugszeichenliste:

- 1: Schaltvorrichtung
- 2: Wählhebel
- 2.1: erster Wählhebelarm
- 2.2: zweiter Wählhebelarm
- 3: Knauf
- 4: Sensorik
- 5: Elektrische Schnittstelle / Steckverbindung
- 6: Rahmen
- 7: feste Gelenkachse
- 8: freie Gelenkachse
- 9: Schubdrehgelenk
- 10: Drehachse am Gelenkstück 22
- 11: Schieber
- 12: Seilzug / Bowdenzug
- 13: Kurvatur
- 14: Langlochkulisse
- 15: Schaltachse im Rahmen gelagert
- 16: Federsystem (Blattfeder mit Rolle)
- 17: Hebelgelenkachse
- 18: Seilzugbefestigung
- 19: Zweiarmhebel
- 20: Langloch
- 21: Erstes Gelenkstück
- 22: Zweites Gelenkstück
- 23: Mehrfachgelenk mit Schubdrehgelenk
- 24: Rolle
- 25: Blattfeder
- 26: Wählachse
- 27: Federelement
- A: erster Kulissenbereich
- B: zweiter Kulissenbereich

## Patentansprüche

1. Schaltvorrichtung (1) zur mechanisch kopplungsfreien Übertragung von Schaltbefehlen an ein automatisches Kraftfahrzeuggetriebe mit mindestens:
einem Gehäuse und/oder einem Rahmen (6),
einem Wählhebel (2) zur manuellen Anwahl von Schaltbefehlen für das Kraftfahrzeuggetriebe in mindestens einer Schaltgasse, wobei der Wählhebel (2) von Hand zumindest in 4 Positionen (P, R, N, D), um zumindest eine Schaltachse (15) schwenkbar, führbar ist,
Übertragungsvorrichtungen (4, 5) zur Übertragung der Schaltbefehle ohne mechanische Kopplung an das Kraftfahrzeuggetriebe, und
einer Parksperre in der P-Position, welche zumindest eine Getriebeausgangswelle arretiert,
**dadurch gekennzeichnet, dass**
eine mechanische Kopplung (16) vom Wählhebel (2) zum Fahrzeuggetriebe derart besteht, dass diese ausschließlich und automatisch bei der Einlegung des Wählhebels (2) in die P-Position die Parksperre aktiviert und beim Ausschwenken des Wählhebels (2) über die benachbarte Position hinaus vom Wählhebel (2) automatisch entkoppelt wird, wobei die mechanische Kopplung (16) einen Seilzug (12) oder ein Gestänge als Verbindung zum Fahrzeuggetriebe aufweist und wobei die, nur in der P-Position wirksame, mechanische Kopplung (16) eine Mehrfachgelenk-Verbindung (23) zum Wählhebel (2) aufweist, wobei die Mehrfachgelenk-Verbindung (23) entweder
ausschließlich eine rahmen- oder gehäuseseitig gelagerte feste Gelenkachse (7) und eine mit dem Seilzug (12) oder dem Gestänge verbundene freie Gelenkachse (8), welche entlang einer Kulissenkontur (14) des Wählhebels (2) geführt ist, aufweist, wobei die freie Gelenkachse (8) direkt mit dem Seilzug (12) derart verbunden ist, dass die freie Gelenkachse (8) als Verbindung zu dem Seilzug (12) dient, oder
eine rahmen- oder gehäuseseitig gelagerte feste Gelenkachse (7) und eine mit dem Seilzug (12) oder dem Gestänge verbundene freie Gelenkachse (8), welche entlang einer Kulissenkontur (14) des Wählhebels (2) geführt ist, und ein rahmen- oder gehäuseseitig gelagertes Schub-Drehgelenk (9) oder ein rahmen- oder gehäuseseitig gelagertes Hebelgelenk an der Verbindung zum Seilzug (12) oder Gestänge aufweist, wobei das Hebelgelenk einen um eine rahmen- oder gehäuseseitig gelagerte weitere feste Gelenkachse (17) drehbeweglichen zweiarmigen Hebelarm (19) aufweist, der jeweils über ein Drehgelenk (10; 18) an einem Ende mit dem Seilzug (12) und an dem anderen Ende mit einem mit der freien Gelenkachse (8) verbundenen Gelenkstück (22) verbunden ist, wobei eine mittels des Schub-Drehgelenks (9) bzw. durch eine Bewegung des Hebelarms (19) bewirkte Schubbewegung am Seilzug (12) die Aktivierung oder Deaktivierung der Parksperre bewirkt.

2. Schaltvorrichtung (1) nach dem voranstehenden Patentanspruch 1, **dadurch gekennzeichnet, dass** die Mehrfachgelenk-Verbindung (23) zwischen Seilzug (12) oder Gestänge und Wählhebel (2) angeordnet ist.

3. Schaltvorrichtung (1) nach einem der voranstehenden Patentansprüche 1 oder 2, **dadurch gekennzeichnet, dass** die Mehrfachgelenk-Verbindung (23) ausschließlich Gelenkachsen (7, 8, 10, 17) aufweist, die parallel zur Schaltachse (15) des Wählhebels (2) angeordnet sind.

4. Schaltvorrichtung (1) nach einem der voranstehenden Patentansprüche 1 bis 3, **dadurch gekennzeichnet, dass** die Mehrfachgelenk-Verbindung (23) das Schub-Drehgelenk (9) oder das Hebelgelenk aufweist, wobei die freie Gelenkachse (8) zwischen den restlichen Gelenkachsen (7, 10) angeordnet ist.

5. Schaltvorrichtung (1) nach einem der voranstehenden Patentansprüche 1 bis 4, **dadurch gekennzeichnet, dass** die Kulissenkontur (14) einerseits einen ersten Kulissenbereich (A) aufweist, der einen konzentrischen Kreisbogen um die Schaltachse (15) des Wählhebels (2) bildet und andererseits einen zweiten Kulissenbereich (B) aufweist, der sich winkelabhängig von der Stellung des Wählhebels (2) um die Schaltachse (15) der Schaltachse (15) des Wählhebels (2) nähert.

6. Schaltvorrichtung (1) nach einem der voranstehenden Patentansprüche 1 bis 5, **dadurch gekennzeichnet, dass** die Mehrfachgelenk-Verbindung (23) ein Drehgelenk (7), vorzugsweise ein endständiges Drehgelenk, aufweist, welches rahmen- oder gehäuseseitig gelagert ist.

7. Schaltvorrichtung (1) nach einem der voranstehenden Patentansprüche 1 bis 6, **dadurch gekennzeichnet, dass** im Bereich der Schaltachse (15) eine elektronische oder optische Erfassungsvorrichtung (4) für die Positionierung des Wählhebels (2) angeordnet ist.

8. Schaltvorrichtung (1) nach einem der voranstehenden Patentansprüche 1 bis 7, **dadurch gekennzeichnet, dass** eine federbelastete Kurvatur (13) am Wählhebel (2) zur Simulation von Schaltkräften vorgesehen ist.

9. Schaltvorrichtung (1) nach dem voranstehenden Patentanspruch 8, **dadurch gekennzeichnet, dass** mindestens 2 Positionen (P, X) über die federbelastete Kurvatur (13) stabil rastiert und mindestens 2 Positionen (R, N, D, +, -) instabil antippbar ausgeführt sind.

10. Schaltvorrichtung (1) nach einem der voranstehenden Patentansprüche 1 bis 9, **dadurch gekennzeichnet, dass** der Wählhebel (2), zumindest teilweise, mittelbar oder unmittelbar zusätzlich um eine senkrecht zur Schaltachse (15) angeordnete Wählachse (26) gelagert ist, wobei vorzugsweise auch der Rahmen (6) um diese Wählachse (26) beweglich gelagert ist.

11. Schaltvorrichtung (1) nach dem voranstehenden Patentanspruch 10, **dadurch gekennzeichnet, dass** die Verbindung zwischen Seilzug (12) oder Gestänge und Mehrfachgelenk (23) ein Drehgelenk aufweist, dessen Achse parallel, vorzugsweise koaxial, zur Wählachse (26) verläuft.

12. Schaltvorrichtung (1) nach dem voranstehenden Patentanspruch 10, **dadurch gekennzeichnet, dass** der Wählhebel (2) auf Höhe der Wählachse (26) zweigeteilt ist, wobei der obere Teil (2.1) des Wählhebels (2) um die Wählachse (26) schwenkbar ausgebildet ist und der untere Teil (2.2) des Wählhebels (2) nur um die Schaltachse (15) schwenkbar ausgebildet ist.

13. Schaltvorrichtung (1) nach dem voranstehenden Patentanspruch 12, **dadurch gekennzeichnet, dass** der obere Teil (2.1) des Wählhebels (2) mit federnden Rückstellvorrichtungen, vorzugsweise einer Rückstellfeder (27), ausgestattet ist, die eine selbständige Rückstellung in eine vorbestimmte Lage erzeugen.

14. Schaltvorrichtung (1) nach einem der voranstehenden Patentansprüche 10 bis 13, **dadurch gekennzeichnet, dass** für die Bewegung des Wählhebels (2; 2.1, 2.2) um die Wählachse (26) eine federbelastete Kurvatur (13) zur Simulation von Schaltkräften vorgesehen ist.

## Claims

1. Shifting apparatus (1) for the mechanical coupling-free transmission of shifting commands to an automatic motor vehicle transmission having at least:
a housing and/or a frame (6),
a selector lever (2) for the manual selection of shifting commands for the motor vehicle transmission in at least one shift gate, it being possible for the selector lever (2) to be guided by hand at least into 4 positions (P, R, N, D), in a manner which can be pivoted about at least one shifting axis (15),
transmission apparatuses (4, 5) for the transmission of the shifting commands without mechanical coupling to the motor vehicle transmission, and
a parking lock in the P position, which parking lock locks at least one transmission output shaft,
**characterized in that**
a mechanical coupling (16) exists from the selector lever (2) to the vehicle transmission in such a way that the said mechanical coupling (16) activates the parking lock exclusively and automatically in the case of the engagement of the selector lever (2) into the P position and is decoupled automatically by the selector lever (2) in the case of the pivoting of the selector lever (2) beyond the adjacent position, the mechanical coupling (16) having a cable pull (12) or a linkage as a connection to the vehicle transmission, and the mechanical coupling (16) which is active only in the P position having a multiple joint connection (23) to the selector lever (2), the multiple joint connection (23) having either exclusively a fixed joint axis (7) which is mounted on the frame side or on the housing side and a free joint axis (8) which is connected to the cable pull (12) or the linkage and is guided along a slotted guide contour (14) of the selector lever (2), the free joint axis (8) being connected directly to the cable pull (12) in such a way that the free joint axis (8) serves as a connection to the cable pull (12), or having a fixed joint axis (7) which is mounted on the frame side or on the housing side and a free joint axis (8) which is connected to the cable pull (12) or the linkage and is guided along a slotted guide contour (14) of the selector lever (2), and a translational/rotary joint (9) which is mounted on the frame side or on the housing side or a lever joint which is mounted on the frame side or on the housing side at the connection to the cable pull (12) or linkage, the lever joint having a two-arm lever arm (19) which can be moved rotationally about a further fixed joint axis (17) which is mounted on the frame side or on the housing side, which lever arm (19) is connected in each case via a rotary joint (10; 18) at one end to the cable pull (12) and at the other end to a joint piece (22) which is connected to the free joint axis (8), a translational movement on the cable pull (12), which translational movement is brought about by way of the translational/rotary joint (9) or by way of a movement of the lever arm (19), bringing about the activation or deactivation of the parking lock.

2. Shifting apparatus (1) according to the preceding Patent Claim 1, **characterized in that** the multiple joint connection (23) is arranged between the cable pull (12) or the linkage and the selector lever (2).

3. Shifting apparatus (1) according to either of the preceding Patent Claims 1 and 2, **characterized in that** the multiple joint connection (23) has exclusively joint axes (7, 8, 10, 17) which are arranged parallel to the shifting axis (15) of the selector lever (2).

4. Shifting apparatus (1) according to one of the preceding Patent Claims 1 to 3, **characterized in that** the multiple joint connection (23) has the translational/rotary joint (9) or the lever joint, the free joint axis (8) being arranged between the remaining joint axes (7, 10).

5. Shifting apparatus (1) according to one of the preceding Patent Claims 1 to 4, **characterized in that** the slotted guide contour (14) has a first slotted guide region (A) on one side, which first slotted guide region (A) forms a concentric circular arc around the shifting axis (15) of the selector lever (2), and has a second slotted guide region (B) on the other side, which second slotted guide region (B) comes closer to the shifting axis (15) of the selector lever (2) in a manner which is dependent on the angle of the position of the selector lever (2) about the shifting axis (15).

6. Shifting apparatus (1) according to one of the preceding Patent Claims 1 to 5, **characterized in that** the multiple joint connection (23) has a rotary joint (7), preferably a terminal rotary joint, which is mounted on the frame side or on the housing side.

7. Shifting apparatus (1) according to one of the preceding Patent Claims 1 to 6, **characterized in that** an electronic or optical detection apparatus (4) for the positioning of the selector lever (2) is arranged in the region of the shifting axis (15).

8. Shifting apparatus (1) according to one of the preceding Patent Claims 1 to 7, **characterized in that** a spring-loaded curvature (13) is provided on the selector lever (2) for the simulation of shifting forces.

9. Shifting apparatus (1) according to the preceding Patent Claim 8, **characterized in that** at least 2 positions (P, X) are configured so as to be latched in a stable manner via the spring-loaded curvature (13), and at least 2 positions (R, N, D, +, -) are configured so as to be capable of being tapped in an unstable manner.

10. Shifting apparatus (1) according to one of the preceding Patent Claims 1 to 9, **characterized in that** the selector lever (2) is mounted at least partially, indirectly or directly additionally about a selecting axis (26) which is arranged perpendicularly with respect to the shifting axis (15), the frame (6) preferably also being mounted such that it can be moved about the said selecting axis (26).

11. Shifting apparatus (1) according to the preceding Patent Claim 10, **characterized in that** the connection between the cable pull (12) or the linkage and the multiple joint (23) has a rotary joint, the axis of which runs parallel, preferably coaxially, with respect to the selecting axis (26).

12. Shifting apparatus (1) according to the preceding Patent Claim 10, **characterized in that** the selector lever (2) is split in two at the level of the selecting axis (26), the upper part (2.1) of the selector lever (2) being configured such that it can be pivoted about the selecting axis (26), and the lower part (2.2) of the selector lever (2) being configured such that it can be pivoted only about the shifting axis (15).

13. Shifting apparatus (1) according to the preceding Patent Claim 12, **characterized in that** the upper part (2.1) of the selector lever (2) is equipped with resilient restoring apparatuses, preferably a restoring spring (27), which generate an automatic resetting action into a predefined position.

14. Shifting apparatus (1) according to one of the preceding Patent Claims 10 to 13, **characterized in that** a spring-loaded curvature (13) for the simulation of shifting forces is provided for the movement of the selector lever (2; 2.1, 2.2) about the selecting axis (26) .

## Revendications

1. Dispositif de changement de vitesses (1) pour le transfert sans accouplement mécanique d'ordres de changement de vitesses à une boîte de vitesses automatique d'un véhicule automobile, comprenant au moins :
un boîtier et/ou un cadre (6),
un levier de sélection (2) pour la sélection manuelle d'ordres de changement de vitesses pour la boîte de vitesses du véhicule automobile dans au moins une voie de changement de vitesses, le levier de sélection (2) pouvant être guidé à la main au moins dans quatre positions (P, R, N, D), de manière à pouvoir pivoter autour d'au moins un axe de changement de vitesses (15),
des dispositifs de transfert (4, 5) pour le transfert des ordres de changement de vitesses sans accouplement mécanique à la boîte de vitesses du véhicule automobile, et
un verrouillage de stationnement dans la position P, qui bloque au moins un arbre de sortie de boîte de vitesses,
**caractérisé en ce**
**qu'**un accouplement mécanique (16) du levier de sélection (2) à la boîte de vitesses du véhicule est prévu de telle sorte que celui-ci active exclusivement et automatiquement le verrouillage de stationnement lors de l'introduction du levier de sélection (2) dans la position P et le désaccouple automatiquement du levier de sélection (2) lors de la sortie par pivotement du levier de sélection (2) au-delà de la position adjacente, l'accouplement mécanique (16) présentant un câble Bowden (12) ou une tringlerie en tant que liaison à la boîte de vitesses du véhicule et l'accouplement mécanique (16), uniquement actif dans la position P, présentant une liaison à articulation multiple (23) au levier de sélection (2), la liaison à articulation multiple (23)
soit présentant exclusivement un axe d'articulation fixe (7) supporté du côté du cadre ou du boîtier et un axe d'articulation libre (8) connecté au câble Bowden (12) ou à la tringlerie, qui est guidé le long d'un contour de coulisse (14) du levier de sélection (2), l'axe d'articulation libre (8) étant connecté directement au câble Bowden (12) de telle sorte que l'axe d'articulation libre (8) serve de connexion au câble Bowden (12),
soit présentant un axe d'articulation fixe (7) supporté du côté du cadre ou du boîtier et un axe d'articulation libre (8) connecté au câble Bowden (12) ou à la tringlerie, qui est guidé le long d'un contour de coulisse (14) du levier de sélection (2), et une articulation pivotante de poussée (9) supportée du côté du cadre ou du boîtier ou une articulation à levier, supportée du côté du cadre ou du boîtier, au niveau de la connexion au câble Bowden (12) ou à la tringlerie, l'articulation à levier présentant un bras de levier à deux bras (19) déplaçable de manière rotative autour d'un axe d'articulation fixe (17) supplémentaire supporté du côté du cadre ou du boîtier, lequel bras de levier est connecté à chaque fois par le biais d'une articulation pivotante (10 ; 18) par une extrémité au câble Bowden (12) et par l'autre extrémité à une pièce d'articulation (22) connectée à l'axe d'articulation libre (8), un mouvement de poussée réalisé au moyen de l'articulation pivotante de poussée (9) ou par un déplacement du bras de levier (19) s'exerçant sur le câble Bowden (12) provoquant l'activation ou la désactivation du verrouillage de stationnement.

2. Dispositif de changement de vitesses (1) selon la revendication précédente 1, **caractérisé en ce que** la liaison à articulation multiple (23) est disposée entre le câble Bowden (12) ou la tringlerie et le levier de sélection (2).

3. Dispositif de changement de vitesses (1) selon l'une quelconque des revendications précédentes 1 ou 2, **caractérisé en ce que** la liaison à articulation multiple (23) présente exclusivement des axes d'articulation (7, 8, 10, 17) qui sont disposés parallèlement à l'axe de changement de vitesses (15) du levier de sélection (2).

4. Dispositif de changement de vitesses (1) selon l'une quelconque des revendications précédentes 1 à 3, **caractérisé en ce que** la liaison à articulation multiple (23) présente l'articulation pivotante de poussée (9) ou l'articulation à levier, l'axe d'articulation libre (8) étant disposé entre les axes d'articulation restants (7, 10) .

5. Dispositif de changement de vitesses (1) selon l'une quelconque des revendications précédentes 1 à 4, **caractérisé en ce que** le contour de coulisse (14) présente d'une part une première région de coulisse (A) qui forme un arc de cercle concentrique autour de l'axe de changement de vitesses (15) du levier de sélection (2) et d'autre part une deuxième région de coulisse (B) qui se rapproche de l'axe de changement de vitesses (15) du levier de sélection (2) en fonction de l'angle de la position du levier de sélection (2) autour de l'axe de changement de vitesses (15).

6. Dispositif de changement de vitesses (1) selon l'une quelconque des revendications précédentes 1 à 5, **caractérisé en ce que** la liaison à articulation multiple (23) présente une articulation pivotante (7), de préférence une articulation pivotante terminale, qui est supportée du côté du cadre ou du boîtier.

7. Dispositif de changement de vitesses (1) selon l'une quelconque des revendications précédentes 1 à 6, **caractérisé en ce que** dans la région de l'axe de changement de vitesses (15) est disposé un dispositif de détection électronique ou optique (4) pour le positionnement du levier de changement de vitesses (2).

8. Dispositif de changement de vitesses (1) selon l'une quelconque des revendications précédentes 1 à 7, **caractérisé en ce qu'**une courbure (13) sollicitée par ressort est prévue au niveau du levier de sélection (2) pour simuler des forces de changement de vitesses.

9. Dispositif de changement de vitesses (1) selon la revendication précédente 8, **caractérisé en ce qu'**au moins 2 positions (P, X) sont réalisées de manière encliquetée de manière stable par le biais de la courbure (13) sollicitée par ressort et au moins 2 positions (R, N, D, +, -) sont réalisées de manière à pouvoir être basculées de manière instable.

10. Dispositif de changement de vitesses (1) selon l'une quelconque des revendications précédentes 1 à 9, **caractérisé en ce que** le levier de sélection (2) est supporté en outre au moins en partie, directement ou indirectement, autour d'un axe de sélection (26) disposé perpendiculairement à l'axe de sélection (15), le cadre (6) étant de préférence également supporté de manière déplaçable autour de cet axe de sélection (26).

11. Dispositif de changement de vitesses (1) selon la revendication précédente 10, **caractérisé en ce que** la connexion entre le câble Bowden (12) ou la tringlerie et l'articulation multiple (23) présente une articulation pivotante dont l'axe s'étend parallèlement, de préférence coaxialement, à l'axe de sélection (26).

12. Dispositif de changement de vitesses (1) selon la revendication précédente 10, **caractérisé en ce que** le levier de sélection (2) est divisé en deux à la hauteur de l'axe de sélection (26), la partie supérieure (2.1) du levier de sélection (2) étant réalisée de manière à pouvoir pivoter autour de l'axe de sélection (26) et la partie inférieure (2.2) du levier de sélection (2) étant réalisée de manière à pouvoir pivoter uniquement autour de l'axe de sélection (15).

13. Dispositif de changement de vitesses (1) selon la revendication précédente 12, **caractérisé en ce que** la partie supérieure (2.1) du levier de sélection (2) est munie de dispositifs de rappel à ressort, de préférence d'un ressort de rappel (27), qui génère un rappel automatique dans une position prédéfinie.

14. Dispositif de changement de vitesses (1) selon l'une quelconque des revendications précédentes 10 à 13, **caractérisé en ce que** pour le déplacement du levier de sélection (2 ; 2.1, 2.2) autour de l'axe de sélection (26), il est prévu une courbure (13) sollicitée par ressort pour simuler des forces de changement de vitesses.
